# FASCICULE DE BREVET EUROPEEN

(11) **EP 1 276 795 B1**
(45) Date de publication et mention de la délivrance du brevet: **08.03.2006**
(21) Numéro de dépôt: 01947225.7
(22) Date de dépôt: 13.04.2001
(51) Int. Cl.: C08J 5/22, B01D 61/44, C01D 1/40

(54) **PROCEDE DE FABRICATION D'UNE MEMBRANE BIPOLAIRE ET UTILISATION DE LA MEMBRANE BIPOLAIRE AINSI OBTENUE**
VERFAHREN ZUR HERSTELLUNG EINER BIPOLAREN MEMBRANE UND DEREN ANWENDUNG
METHOD FOR MAKING A BIPOLAR MEMBRANE AND USE OF RESULTING BIPOLAR MEMBRANE

(30) Priorité: 19.04.2000 FR 0005133
(43) Date de publication de la demande: 22.01.2003
(73) Titulaire: SOLVAY (Société Anonyme), 1050 Bruxelles (BE)
(72) Inventeur: MISCHI, Ellenio, I-57013 Rosignano Solvay - Livorno (IT); MANTIONE, Davide, 8000 Bahia Blanca (P.cia Buenos Aires) (AR); PASTACALDI, Alessandra, I-57013 Rosignano Solvay - Livorno (IT); BOTTE, Luc, I-57013 Rosignano Solvay - Livorno (IT)
(74) Mandataire: Jacques, Philippe
(86) Numéro de dépôt international: PCT/EP2001/004334
(87) Numéro de publication internationale: WO 2001/079335

(56) Documents cités:
- EP-A- 0 459 820
- EP-A- 0 659 467
- WO-A-89/01059
- WO-A-96/01286
- WO-A-96/09337
- GB-A- 2 122 543

## Description

La présente invention concerne un procédé pour la fabrication de membranes bipolaires.

Les membranes bipolaires sont des éléments constitutifs des cellules d'électrodialyse. Ces dernières sont bien connues en technique où elles sont notamment utilisées pour la fabrication d'acides et de bases au départ de solutions aqueuses de leurs sels. Dans cette application, les membranes bipolaires sont immergées dans des électrolytes aqueux, où elles sont le siège d'une dissociation de l'eau sous l'action d'un champs électrique. On cherche généralement à réduire la tension électrique nécessaire à la dissociation de l'eau dans la membrane bipolaire.

Dans des procédés généralement utilisés pour fabriquer des membranes bipolaires on accole une membrane cationique et une membrane anionique, qui ont au préalable subi un prétraitement de conditionnement. A cet effet, dans le brevet européen EP 0 368 924 B (UNISEARCH LIMITED), on décrit un procédé de fabrication d'une membrane bipolaire, selon lequel une membrane cationique et une membrane anionique sont soumises à un prétraitement de conditionnement identique, qui comprend leur mise en contact avec une solution aqueuse d'un sel d'un métal autre que le sodium ou le potassium et avec une solution alcaline (généralement une solution aqueuse d'hydroxyde de sodium); les membranes recueillies du prétraitement de conditionnement sont ensuite superposées pour constituer la membrane bipolaire.

Le procédé décrit dans le brevet européen EP 0 769 032 B diffère du procédé décrit dans le brevet européen EP 0 368 924 B par le remplacement de la solution alcaline par une solution aqueuse de sulfate ou de sulfite métallique, de manière à former un gel de sulfate ou de sulfite métallique hydraté à l'interface des deux membranes accolées. Par ailleurs, dans le procédé selon le brevet EP 0 769 032 B, le traitement des membranes cationique et anionique avec la solution de sulfate ou de sulfite métallique peut être opéré invariablement avant ou après la superposition de ces membranes.

Les membranes bipolaires obtenues au moyen des procédés connus qui viennent d'être décrits présentent une bonne cohésion mécanique, une résistance électrique modérée et une tension électrique modérée pour la dissociation de l'eau.

L'invention a pour objectif de fournir des membranes bipolaires de performances améliorées par rapport à celles des membranes obtenues au moyen des procédés connus décrits ci-dessus, en particulier des membranes bipolaires présentant une plus faible tension de dissociation de l'eau.

En conséquence, l'invention concerne un procédé de fabrication d'une membrane bipolaire, selon lequel on soumet une membrane cationique et une membrane anionique à un traitement avec un sel métallique, on accole les deux membranes et, avant et/ou après avoir accolé les deux membranes, on les met en contact avec une solution de traitement sélectionnée parmi les solutions aqueuses alcalines, les solutions aqueuses de sulfate métallique et les solutions aqueuses de sulfite métallique; selon l'invention, le procédé se caractérise en ce que, pour le traitement de la membrane cationique, on sélectionne un sel d'un métal du groupe 8 du tableau périodique des éléments et, pour le traitement de la membrane anionique, on sélectionne un sel d'un métal de transition n'appartenant pas au groupe 8.

Dans le procédé selon l'invention, la membrane cationique est une feuille mince, non poreuse, sélectivement perméable aux cations et imperméable aux anions. Les membranes cationiques utilisables dans le procédé selon l'invention doivent être en une matière inerte vis-à-vis des solutions aqueuses acides ou basiques. Des membranes cationiques utilisables dans le procédé selon l'invention sont par exemple des feuilles en polymère fluoré contenant des groupements fonctionnels dérivés d'acides sulfoniques, d'acides carboxyliques ou d'acides phosphoniques ou des mélanges de tels groupements fonctionnels, ces groupements jouant le rôle de sites cationiques fixes de la membrane. Des exemples de membranes cationiques de ce type sont celles connues sous le nom RAIPORE (PALL RAI) et sous la marque MORGANE (SOLVAY), en particulier les membranes RAIPORE R-4010, MORGANE CDS et MORGANE CRA.

La membrane anionique est une feuille mince, non poreuse, sélectivement perméable aux anions et imperméable aux cations. Des membranes anioniques utilisables dans le procédé selon l'invention sont des feuilles en un matériau polymérique inerte vis-à-vis des solutions aqueuses acides ou basiques et comprenant des groupements d'ammonium quaternaire jouant le rôle de sites anioniques fixes. Les membranes RAIPORE R-1030, RAIPORE R-4030 et MORGANE ADP constituent des exemples de membranes anioniques utilisables dans le procédé selon l'invention.

Les membranes bipolaires sont des membranes qui présentent, sur une face, les propriétés d'une membrane cationique et, sur l'autre face, les propriétés d'une membrane anionique.

L'épaisseur des membranes anionique et cationique va conditionner les propriétés mécaniques et électrochimiques de la membrane bipolaire obtenue à l'issue du procédé selon l'invention. L'épaisseur optimum des membranes anionique et cationique va résulter d'un compromis entre une résistance mécanique suffisante (propriété favorisée par les grandes épaisseurs) et une faible résistance électrique transversale (propriété favorisée par les faibles épaisseurs). En pratique, l'épaisseur de la membrane cationique et celle de la membrane anionique sont généralement supérieures à 10 µm, de préférence au moins égale à 20 µm. Elles sont généralement inférieures à 250 µm et excèdent rarement 200 µm, les épaisseurs les plus adéquates étant généralement de 30 à 150 µm.

Dans le procédé selon l'invention, la membrane cationique et la membrane anionique sont traitées séparément avec un sel métallique. Conformément à l'invention, on sélectionne un sel d'un métal du groupe 8 pour le traitement de la membrane cationique et on sélectionne un sel d'un métal de transition n'appartenant pas au groupe 8 pour le traitement de la membrane anionique. Le sel métallique est avantageusement un sel hydrosoluble, de préférence un sel inorganique, les sels inorganiques hydratés étant spécialement recommandés. Les chlorures, les nitrates, les sulfates et les phosphates conviennent bien.

Le traitement de la membrane cationique et de la membrane anionique avec les sels métalliques a pour fonction de substituer une partie au moins des co-ions des membranes par des ions des métaux des sels métalliques. On cherche généralement à incorporer dans chacune des deux membranes une quantité d'ions des sels métalliques, qui soit supérieure à 10 et inférieure à 100 mg par m² de superficie de la membrane. La superficie à considérer est celle de la face de la membrane (cationique ou anionique), qui se trouve en contact avec l'autre membrane (anionique ou cationique) dans la membrane bipolaire. Les valeurs de 20 à 100 mg/m² sont préférées; celles de 25 à 40 mg/m² sont spécialement avantageuses.

Un moyen commode pour traiter les membranes cationique et anionique avec les sels métalliques, consiste à imprégner la face susdite de ces membranes, avec une solution aqueuse du sel métallique. L'imprégnation des membranes peut être facilement réalisée en les immergeant dans un bain de la solution de sel métallique. Tout autre moyen d'imprégnation connu et approprié peut évidemment être utilisé. La solution aqueuse du sel métallique peut être indifféremment une solution acide, une solution basique ou une solution de pH neutre. En pratique, le pH optimum est conditionné par le sel métallique utilisé, de manière à obtenir la solubilité maximum. La concentration de la solution aqueuse n'est pas critique, les solutions concentrées étant toutefois préférées. On recommande d'utiliser des solutions aqueuses dont la concentration en sel métallique est au moins égale à 0,1 (de préférence à 0,5) mole/l. La concentration maximum admissible de la solution aqueuse du sel métallique est celle qui correspond à la saturation et elle dépend dès lors de divers paramètres tels que le sel métallique mis en oeuvre, la température de la solution et la valeur du pH de celle-ci. On préfère mettre en oeuvre des solutions à une température voisine de la température ambiante, par exemple de 15 à 35 °C.

Dans le procédé selon l'invention, les membranes cationique et anionique sont en outre mises en contact avec une solution de traitement, sélectionnée parmi les solutions aqueuses alcalines, les solutions aqueuses de sulfate métallique et les solutions aqueuses de sulfite métallique. Des exemples préférés de solutions alcalines sont les solutions d'hydroxydes de métaux alcalins, parmi lesquels l'hydroxyde de sodium et l'hydroxyde de lithium sont préférés. Les sulfates et les sulfites métalliques sont avantageusement sélectionnés parmi les sulfates et les sulfites des métaux alcalins. Les solutions aqueuses de sulfate de sodium et les solutions aqueuses de sulfite de sodium constituent les solutions de traitement préférées.

Un moyen commode pour mettre les membranes cationique et anionique en contact avec la solution de traitement consiste à les immerger dans un bain de cette solution de traitement, comme exposé plus haut dans le cas du traitement avec le sel métallique. Tout autre moyen d'imprégnation connu et approprié peut également être utilisé

Tous moyens appropriés peuvent être mis en oeuvre pour accoler la membrane cationique à la membrane anionique. Un moyen préféré consiste à appliquer les deux membranes l'une sur l'autre, à l'état humide, en évitant la formation de poches d'air entre elles. Les deux membranes peuvent être appliquées l'une sur l'autre sous pression ou sans faire usage de pression. L'accolement des deux membranes peut être exécuté à la température ambiante ou à haute température, à condition que celle-ci reste inférieure à la température de dégradation thermique de la membrane cationique ou de la membrane anionique.

Dans le procédé selon l'invention, la mise en contact des membranes cationique et anionique avec la solution de traitement peut être réalisé avant ou après avoir accolé ces deux membranes pour former la membrane bipolaire. On préfère la réaliser avant d'accoler les deux membranes.

Dans une forme de réalisation avantageuse du procédé selon l'invention, le métal du groupe 8 est sélectionné parmi le fer, le cobalt et le nickel et le métal de transition n'appartenant pas au groupe 8 est sélectionné parmi le chrome, le molybdène et le tungstène.

Dans une autre forme de réalisation du procédé selon l'invention, le sel du métal du groupe 8 est dispersé dans une fraction de la solution de traitement et le sel du métal de transition est dispersé dans une autre fraction de la solution de traitement et, avant d'accoler les deux membranes, on traite la membrane cationique avec la fraction de solution de traitement contenant le sel de métal du groupe 8 et on traite la membrane anionique avec l'autre fraction de la solution de traitement. Cette forme de réalisation du procédé selon l'invention présente l'avantage de simplifier le processus opératoire.

Dans une variante d'exécution préférée de la forme de réalisation qui vient d'être décrite, la solution de traitement est une solution aqueuse de sulfate ou de sulfite de métal alcalin (de préférence de sodium) et les membranes cationique et anionique sont soumises à une maturation, au contact de la solution de traitement, avant d'être accolées pour constituer la membrane bipolaire. Dans cette variante de l'invention, la maturation a pour fonction de provoquer la précipitation de sulfate ou de sulfite du métal du groupe 8 dans la membrane cationique et la précipitation de sulfate ou de sulfite du métal de transition dans la membrane anionique et la formation subséquente d'un gel. Des informations complémentaires concernant le traitement de maturation sont accessibles dans le brevet européen EP 0 769 032 B [SOLVAY (Société Anonyme)].

La membrane bipolaire recueillie à l'issue du procédé selon l'invention doit de préférence être conservée à l'état humide, avant de l'utiliser dans une cellule d'électrodialyse.

La membrane bipolaire obtenue au moyen du procédé selon l'invention est bien adaptée à la décomposition électrochimique de l'eau et elle peut dès lors être utilisée dans les techniques d'électrodialyse mettant en oeuvre des solutions aqueuses.

L'invention concerne dès lors également l'utilisation de la membrane bipolaire obtenue au moyen du procédé selon l'invention, pour la fabrication d'hydroxyde de métal alcalin par électrodialyse d'une solution aqueuses d'un sel de métal alcalin. Elle concerne spécialement l'utilisation de ladite membrane bipolaire pour la fabrication d'hydroxyde de sodium par électrodialyse d'une solution aqueuse de chlorure, carbonate, sulfate ou nitrate de sodium.

Des particularités et détails de l'invention vont apparaître au cours de la description suivante d'un exemple de réalisation du procédé selon l'invention.

On a fabriqué une membrane bipolaire au départ d'une membrane cationique MORGANE CDS et d'une membrane anionique MORGANE ADP. A cet effet, on a d'abord préparé séparément un bain pour le traitement de la membrane cationique et un bain pour le traitement de la membrane anionique. Le bain destiné à la membrane cationique a consisté en une solution aqueuse de nitrate ferrique nonahydraté, de sulfate de sodium et de sulfate de magnésium. Le bain destiné à la membrane anionique a consisté en une solution aqueuse de nitrate chromique nonahydraté, de sulfate de sodium et de sulfate de magnésium.

On a immergé la membrane cationique dans le bain contenant le nitrate ferrique et on a immergé la membrane anionique dans le bain contenant le nitrate chromique. On a soumis les deux membranes à une maturation dans leurs bains respectifs, en les y maintenant immergées pendant un temps situé entre 50 et 80 heures, les bains étant maintenus à une température de 75 à 100 °C.

A l'issue de ce traitement de maturation, on a extrait les deux membranes de leur bain, on les a immédiatement appliquées l'une sur l'autre et on a appliqué une pression momentanée d'environ 15 bars sur les deux membranes accolées; en les faisant circuler une fois entre les rouleaux d'une presse.

## Revendications

1. Procédé de fabrication d'une membrane bipolaire, selon lequel on soumet une membrane cationique et une membrane anionique à un traitement avec un sel métallique, on accole les deux membranes et, avant et/ou après avoir accolé les deux membranes, on les met en contact avec une solution de traitement sélectionnée parmi les solutions aqueuses alcalines , les solutions aqueuses de sulfate métallique et les solutions aqueuses de sulfite métallique, **caractérisé en ce que**, pour le traitement de la membrane cationique, on sélectionne un sel d'un métal du groupe 8 du tableau périodique des éléments et, pour le traitement de la membrane anionique, on sélectionne un sel d'un métal de transition n'appartenant pas au groupe 8.

2. Procédé selon la revendication 1, **caractérisé en ce qu'**on sélectionne le métal du groupe 8 parmi le fer, le cobalt et le nickel et on sélectionne le métal de transition n'appartenant pas au groupe 8 parmi le chrome, le molybdène et le tungstène.

3. Procédé selon la revendication 1 ou 2, **caractérisé en ce que** le sel du métal du groupe 8 et le sel du métal de transition n'appartenant pas au groupe 8 sont sélectionnés parmi les nitrates et les chlorures.

4. Procédé selon l'une quelconque des revendications 1 à 3, **caractérisé en ce que** le sel du métal du groupe 8 est dispersé dans une fraction de la solution de traitement et le sel du métal de transition est dispersé dans une autre fraction de la solution de traitement et, avant d'accoler les deux membranes, on traite la membrane cationique avec la fraction de solution de traitement contenant le sel de métal du groupe 8 et on traite la membrane anionique avec l'autre fraction de la solution de traitement.

5. Procédé selon l'une quelconque des revendications 1 à 4, **caractérisé en ce que** la solution de traitement est une solution de sulfate ou de sulfite de métal alcalin.

6. Procédé selon la revendication 5, **caractérisé en ce que** la solution de traitement est une solution de sulfate de sodium.

7. Procédé selon la revendication 5 ou 6, **caractérisé en ce que** la membrane cationique et la membrane anionique sont soumises à une maturation au contact de la solution de traitement

8. Procédé selon l'une quelconque des revendications 1 à 7, **caractérisé en ce que** les sels métalliques sont des sels hydratés.

9. Utilisation de la membrane bipolaire obtenue au moyen du procédé selon l'une quelconque des revendications 1 à 8, pour la fabrication d'hydroxyde de sodium par électrodialyse d'une solution aqueuse d'un sel de sodium.

10. Utilisation selon la revendication 9, **caractérisée en ce que** le sel de sodium comprend du chlorure de sodium.

## Claims

1. Process for producing a bipolar membrane, in which a cationic membrane and an anionic membrane undergo a treatment with a metal salt, the two membranes are conjoined and, before and/or after conjoining the two membranes, they are brought into contact with a treatment solution selected from alkaline aqueous solutions, aqueous metal sulphate solutions and aqueous metal sulphite solutions, **characterized in that** a salt of a metal from group 8 of the periodic table of the elements is selected to treat the cationic membrane, and a salt of a transition metal that does not belong to group 8 is selected to treat the anionic membrane.

2. Process according to Claim 1, **characterized in that** the group 8 metal is selected from iron, cobalt and nickel, and the transition metal that does not belong to group 8 is selected from chromium, molybdenum and tungsten.

3. Process according to Claim 1 or Claim 2, **characterized in that** the salt of the metal from group 8 and the salt of the transition metal not belonging to group 8 are selected from nitrates and chlorides.

4. Process according to any one of Claims 1 to 3, **characterized in that** the salt of the group 8 metal is dispersed in a fraction of the treatment solution and the salt of the transition metal is dispersed in another fraction of the treatment solution and, prior to conjoining the two membranes, the cationic membrane is treated with the fraction of the treatment solution containing the salt of the group 8 metal and the anionic membrane is treated with the other fraction of the treatment solution.

5. Process according to any one of Claims 1 to 4, **characterized in that** the treatment solution is a solution of an alkali metal sulphate or sulphite.

6. Process according to Claim 5, **characterized in that** the treatment solution is a sodium sulphate solution.

7. Process according to Claim 5 or Claim 6, **characterized in that** the cationic membrane and the anionic membrane undergo maturing in contact with the treatment solution.

8. Process according to any one of Claims 1 to 7, **characterized in that** the metal salts are hydrated salts.

9. Use of a bipolar membrane obtained by means of a process according to any one of Claims 1 to 8, for the production of sodium hydroxide by electrodialysis of an aqueous solution of a sodium salt.

10. Use according to Claim 9, **characterized in that** the sodium salt comprises sodium chloride.

## Patentansprüche

1. Verfahren zur Herstellung einer bipolaren Membrane, wonach eine kationische Membrane und eine anionische Membrane einer Behandlung mit einem Metallsalz unterworfen werden, die beiden Membranen aneinandergefügt werden und, vor und/oder nach dem Aneinanderfügen der beiden Membranen, diese mit einer Behandlungslösung, ausgewählt unter den wässerigen Alkalilösungen, den wässerigen Metallsulfatlösungen und den wässerigen Metallsulfitlösungen, in Kontakt gebracht werden, **dadurch gekennzeichnet, dass** für die Behandlung der kationischen Membrane ein Salz eines Metalles aus der Gruppe 8 des Periodensystems der Elemente ausgewählt wird und für die Behandlung der anionischen Membrane ein Salz eines Übergangsmetalles ausgewählt wird, das nicht der Gruppe 8 angehört.

2. Verfahren nach Anspruch 1, **dadurch gekennzeichnet, dass** das Metall der Gruppe 8 unter Eisen, Cobalt und Nickel ausgewählt wird und das nicht der Gruppe 8 angehörende Übergangsmetall unter Chrom, Molybdän und Wolfram ausgewählt wird.

3. Verfahren nach Anspruch 1 oder 2, **dadurch gekennzeichnet, dass** das Salz des Metalles der Gruppe 8 und das Salz des nicht der Gruppe 8 angehörenden Übergangsmetalles unter den Nitraten und den Chloriden ausgewählt werden.

4. Verfahren nach einem der Ansprüche 1 bis 3, **dadurch gekennzeichnet, dass** das Salz des Metalles der Gruppe 8 in einem Teil der Behandlungslösung dispergiert wird und das Salz des Übergangsmetalles in einem anderen Teil der Behandlungslösung dispergiert wird und, vor dem Aneinanderfügen der beiden Membranen, die kationische Membrane mit dem Teil der Behandlungslösung behandelt wird, der das Salz des Metalles der Gruppe 8 enthält, und die anionische Membrane mit dem anderen Teil der Behandlungslösung behandelt wird.

5. Verfahren nach einem der Ansprüche 1 bis 4, **dadurch gekennzeichnet, dass** die Behandlungslösung eine Sulfat- oder Sulfitlösung eines Alkalimetalles ist.

6. Verfahren nach Anspruch 5, **dadurch gekennzeichnet, dass** die Behandlungslösung eine Natriumsulfatlösung ist.

7. Verfahren nach Anspruch 5 oder 6, **dadurch gekennzeichnet, dass** die kationische Membrane und die anionische Membrane im Kontakt mit der Behandlungslösung einem Reifungsprozess unterworfen werden.

8. Verfahren nach einem der Ansprüche 1 bis 7, **dadurch gekennzeichnet, dass** die Metallsalze hydratisierte Salze sind.

9. Verwendung der mit Hilfe des Verfahrens nach einem der Ansprüche 1 bis 8 erhaltenen bipolaren Membrane zur Herstellung von Natriumhydroxid durch Elektrodialyse einer wässerigen Lösung eines Natriumsalzes.

10. Verwendung nach Anspruch 9, **dadurch gekennzeichnet, dass** das Natriumsalz Natriumchlorid umfasst.
